# EUROPÄISCHE PATENTSCHRIFT

(11) **EP 1 215 113 B1**
(45) Veröffentlichungstag und Bekanntmachung des Hinweises auf die Patenterteilung: **08.03.2006**
(21) Anmeldenummer: 01125339.0
(22) Anmeldetag: 29.10.2001
(51) Int. Cl.: B62K 21/08, B62J 1/06

(54) **Schockdämpfungsvorrichtung für Fahrräder**
Shock-absorbing device for bicycles
Dispositif antichoc pour bicyclette

(30) Priorität: 15.12.2000 DE 10062589
(43) Veröffentlichungstag der Anmeldung: 19.06.2002
(73) Patentinhaber: Mechanische Werkstatt HGH Hans G. Hillreiner, 85229 Hirtlbach (DE)
(72) Erfinder: Hillreiner, Hans G., 85229 Hirtlbach (DE)
(74) Vertreter: Schwabe - Sandmair - Marx

(56) Entgegenhaltungen:
- WO-A-93/23281
- DE-U- 9 003 484
- FR-A- 885 282
- US-A- 601 978
- US-A- 664 184
- US-A- 686 156
- US-A- 5 927 738

## Beschreibung

Die Erfindung betrifft eine Schockdämpfungsvorrichtung, bevorzugt für Fahrräder zur dämpfenden Lagerung einer Sitzgelegenheit, insbesondere eines Fahrsattels, eines Lenkers oder dgl. gemäß dem Oberbegriff des Patentanspruchs 1. Derartige Schockdämpfungsvorrichtungen, die auch als gefederte bzw. gedämpfte Sattelstütze bekannt sind, dienen dazu, einen Fahrradfahrer vor Erschütterungen zu schützen, die beispielsweise bedingt durch Schlaglöcher, Kopfsteinpflaster oder dgl. ansonsten unmittelbar auf den Fahrer übertragen werden würde. Solche zum Teil sehr harten mechanischen Einflüsse sind durchaus in der Lage, die Gesundheit eines Fahrradfahrers zu beeinträchtigen, und können im Extremfall sogar zu Bandscheibenvorfällen oder dgl. führen.

Aus diesen Gründen sind in jüngerer Zeit Sattelstützen entwickelt worden, die gefedert bzw. gedämpft sind, um mechanische Einflüsse so weit als möglich vom Fahrer femzuhalten.

So offenbar beispielsweise das DE 86 24 829.4 U1 einen Sattelstoßdämpfer für ein Fahrrad, bei dem ein als zylindrischer Hohlkörper ausgebildeter ersten Anschlussabschnitt eine Federeinrichtung enthält, die zwischen einem Widerlager und einem zweiten Anschlussabschnitt eingespannt ist. Der zweite Anschlussabschnitt ist vorgesehen um hieran den Sattel zu befestigen. Der erste Anschlussabschnitt kann gegenüber dem zweiten Anschlussabschnitt abgefedert durch die Federeinrichtung in Axialrichtung bewegt werden. Um ein Verdrehen des ersten Anschlussabschnittes zu dem zweiten Anschlussabschnitt und damit ein Verdrehen des Fahrradsattels zu dem Fahrradrahmen zu vermeiden, weist der erste Anschlussabschnitt Längsschlitze als Führungsschlitze auf, während dem zweiten Anschlussabschnitt scheibenförmige Führungselemente zugeordnet sind, die in den Schlitzen geführt werden. Zwar kann hier ein Verdrehen des Fahrradsattels zum Fahrradrahmen vermieden werden, jedoch sind die mechanischen Belastungen, die auf die Führungsschlitze bzw. die Führungselemente einwirken, so stark, dass die sachgerechte Funktion dieser Art der Verdrehsicherung nur über eine vergleichsweise kurze Zeit gewährleistet werden kann. Sobald der Führungsschlitz bzw. die Führungselemente einen gewissen Abnutzungsgrad aufweisen, wird nicht nur die Funktion als Verdrehsicherung beeinträchtigt, sondern das gesamte Dämpfungsverhalten wird beeinträchtigt.

Das DE 92 00 156.4 U1 offenbart ebenfalls eine gefederte Sattelstütze für Fahrräder, bei der ein Verdrehen über ein Hebelgestänge, über Führungsnuten in Verbindung mit einem Führungsgrad über einen Führungsdom, der in ein Führungsrohr hineinragt, oder dgl. bewerkstelligt wird. Auch hier treten mechanische Belastungen auf, die über kurz oder lang zu starken Abnutzungserscheinungen führen.

Die EP 0 734 944 A1 offenbart ebenfalls eine Schockdämpfungsvorrichtung für Fahrräder, die zwar in Bezug auf ihre Dämpfungseigenschaften und die Sicherheit wesentlich verbessert ist, jedoch im Hinblick auf die Verdrehsicherung und deren Abnutzung nach wie vor verbesserungsfähig ist.

Die US 601,978 A bezieht sich auf Fahrräder und genauer auf Sitze oder Sättel von Fahrrädern. Mehrere Lagen von Kugeln sind in Kugellagern angeordnet. Die Kugellager dienen unter anderem dazu, einen Kolben und damit den daran anschließenden Sattel am Schwenken, d.h., am horizontalen Verdrehen zu hindern. Auch Passfedern an der Innenseite des Zylinders werden genannt, die ebenfalls als Verdrehsicherung dienen.

Die US-A-5,927,738 bezieht sich auf ein Sitzfedersystem für ein Fahrrad und genauer auf ein Sitzfedersystem, welches anspruchsvolle stoßdämpfende Eigenschaften zur Verfügung stellen soll. Es wird ausgeführt, dass Kugellagerlaufringe durch Umformen in den inneren und äußeren Rohren vorgesehen sind und Kugellager bei den Laufringen angeordnet sind. Eine feste Keilverbindung der Rohre durch die Lager soll das unerwünschte Verdrehen des Fahrradsattels während des Gebrauches verhindern.

Es ist die Aufgabe gemäß der vorliegenden Erfmdung, eine Schockdämpfungsvorrichtung insbesondere für einen Fahrradsattel, einen Fahrradlenker oder dgl. zur Verfügung zu stellen, bei der keine Abnutzungserscheinungen an dem Verdrehsicherungsabschnitt die Lebensdauer der Schockdämpfungsvorrichtung selbst und die Schockdämpfungsfunktion beeinträchtigen können.

gemäß der Erfindung wird diese Aufgabe durch eine Schockdämpfungsvorrichtung mit den im Patentanspruch 1 aufgeführten Merkmalen gelöst.

Zweckmäßige Ausführungsformen der erfindungsgemäßen Schockdämpfungsvorrichtung werden durch die in den Unteransprüchen aufgeführten Merkmale definiert.

Die gemäß der vorliegenden Erfindung zu erzielenden Vorteile beruhen auf einer Schockdämpfungsvorrichtung bzw. einer Sattelstütze, die einen ersten Anschlussabschnitt aufweist, um die Schockdämpfungsvorrichtung bzw. Sattelstütze an einem Fahrzeug- bzw. einem Fahrradrahmen zu befestigen und die ferner einen zweiten Anschlussabschnitt aufweist, um die Schockdämpfungsvorrichtung bzw. die Sattelstütze mit der Sitzgelegenheit, insbesondere dem Fahrradsattel, zu verbinden. Ferner umfasst die erfindungsgemäße Vorrichtung einen Feder- bzw. Schockdämpfungsabschnitt, etwa auch in der Form eines pneumatischen oder hydraulischen Stossdämpfers, wenigstens eine Führungskulisse bzw. mehrere Führungskulissen, -rillen, -schlitze, -nuten oder dgl., und einen Verdrehsicherungsabschnitt, um einem Verdrehen der Sitzgelegenheit gegenüber dem Fahrzeug- bzw. Fahrradrahmen entgegenzuwirken, wobei die Anschlussabschnitte einander überlappen und im Überlappungsbereich der Verdrehsicherungsabschnitt angeordnet ist, wobei erfindungsgemäß der Verdrehsicherungsabschnitt Führungen beispielsweise in der Form von Kulissensteinen umfasst, wobei die Kulissensteine als Kugeln, Walzen oder dgl. ausgebildet sein können, die eine axiale Bewegung aber im Wesentlichen keine Verdrehbewegung des ersten Abschnittes relativ zu dem zweiten Abschnitt zulassen, wobei diese in die Führungskulissen, -nuten bzw. -rillen oder dgl. eingreifen. Die in Umfangsrichtung der Anschlussabschnitte festgelegten Kulissensteine, die beispielsweise in eine Führungskulisse, - rille bzw. -nut am beispielsweise zweiten Anschlussabschnitt eingreifen, können innerhalb ihres Lagergehäuses in dem Verdrehsicherungsabschnitt und gegenüber der Kulisse frei um sich drehbar angeordnet sein, so dass bei Schwingungen zur Abfederung von mechanischen Schocks die Führung so reibungslos wie möglich vonstatten gehen kann. D.h., beispielsweise, dass der zweite Anschlussabschnitt koaxial in dem ersten Anschlussabschnitt beweglich sein kann, wobei eine Verdrehbewegung des ersten Anschlussabschnittes zu dem zweiten Anschlussabschnitt durch das Zusammenwirken der Kulissen mit den Kulissensteinen vermieden wird, jedoch die freie koaxiale Abfederungsbewegung bzw. Dämpfungsbewegung zugelassen wird, wozu die Kulissen bzw. Führung parallel zu der Richtung der Feder- bzw. Dämpfungsbewegung ausgerichtet sind.

Natürlich lassen sich vergleichbare Vorteile auch erzielen, wenn die erfindungsgemäße Schockdämpfungsvorrichtung eingesetzt wird, um zwischen einer Vorderradgabel und einem Lenker eines Fahrzeuges und insbesondere eines Fahrrades zu bewirken.

Der Verdrehsicherungsabschnitt kann entweder gegenüber dem ersten oder gegenüber dem zweiten Anschlussabschnitt ortsfest gehalten sein. Dabei kann jeweils der andere Anschlussabschnitt gegen Verdrehen durch die Ausbildung der Führungskulissen gesichert, axial bzw. koaxial zu dem Anschlussabschnitt, demgegenüber der Verdrehsicherungsabschnitt festgehalten ist, beweglich sein.

Zwar können die Kulissensteine bzw. Kugeln oder dgl. auch über den Umfang in verschiedenen Höhen zueinander angeordnet sein, um so in Axialrichtung zwar gleich zu wirken, jedoch gegenüber Querkräften stabiler zu sein, jedoch wird es aus fertigungstechnischen Gründung zu bevorzugen sein, dass die Kugeln bzw. Kulissensteine in einer Ebene parallel zu der Querschnittsebene des ersten bzw. des zweiten Anschlussabschnittes angeordnet werden.

Um die Stabilisierung insbesondere auch gegen Querkräfte zu bewerkstelligen, ist es besonders von Vorteil, wenn in der axialen Bewegungsrichtung mehr als eine Kugel, Walze oder dgl., jedenfalls ein Kulissenstein angeordnet ist, wobei diese mehreren beispielsweise hintereinander angeordneten Kulissensteine die Führung des ersten gegenüber dem zweiten Anschlussabschnitt bzw. umgekehrt, übernehmen. Eine derartige Anordnung sollte wenigstens einmal vorgesehen sein, um die gewünschte Stabilisierung gegenüber Querkräften zu erzielen. Natürlich wird eine erfindungsgemäße Schockdämpfungsvorrichtung besonders stabilisiert, wenn an wenigstens drei über den Umfang verteilten Stellen des ersten bzw. des zweiten Anschlussabschnittes innerhalb des Verdrehsicherungsabschnittes jeweils wenigstens zwei Kulissensteine, Kugeln, Walzen oder dgl. hintereinander angeordnet sind, wobei die Lagerung der Kulissensteine bzw. Kugeln in der Art vorgenommen wird, wie dies in Kugellagern üblich ist. Die Kugeln können beispielsweise über Graphit, Öl oder ähnliche Schmiermittel so reibungslos wie möglich gelagert sein. Vorteilhafterweise können die Kulissensteine, Kugeln oder dgl. in axialer Bewegungsrichtung derart angeordnet sein, dass diese in der axialen Bewegungsrichtung wenigstens abschnittweise mitlaufen können. Auf diese Weise kann zusätzlich der axiale Reibungswiderstand verringert werden, während die Führungseigenschaften zusätzlich verbessert werden können. Auch die Lebensdauer der erfindungsgemäßen Vorrichtung kann hierdurch erheblich gesteigert werden.

Eine erfindungsgemäße Ausführungsform ergibt sich, wenn die Kulissensteine bzw. Kugeln, Walzen oder dgl. in Umlauflagerräumen aufgenommen sind. Bei jeder axialen Dämpfungsbewegung können dann mehrere Kugeln, die bevorzugt die Umlauflagerräume im Wesentlichen füllen, mitlaufen, so dass einerseits eine möglichst große Führung erreicht wird, und andererseits sehr geringe Abnutzungserscheinungen an den Kulissensteinen bzw. Kugeln oder dgl. selbst auftreten, was die Lebensdauer der erfindungsgemäßen Vorrichtung nochmals verbessert. Auch gegenüber Querkräften ist eine entsprechende erfindungsgemäße Vorrichtung mit Umlauflagerräumen bzw. mit Umlaufkugellagem sehr vorteilhaft.

Sehr vorteilhaft und zweckmäßig ist ein Verdrehsicherungsabschnitt, der drei oder vier Umlaufkugellager aufweist, die winkelmäßig gleichmäßig über den Umfang des zugeordneten Anschlussabschnitts verteilt sind.

Um die Größe des Verdrehsicherungsabschnittes zu optimieren kann dieser im Querschnitt relativ zu der axialen Dämpfungsbewegung des ersten Anschlussabschnittes zu dem zweiten Anschlussabschnitt beispielsweise oval ausgeführt sein, so dass im Falle mehrerer Kulissensteine bzw. Umlaufkugellager diese einander gegenüberliegen oder auch paarweise einander gegenüberliegen.
Nachfolgend wird die vorliegende Erfindung anhand von bevorzugten Ausführungsbeispielen unter Bezugnahme auf die beigefügten Darstellungen näher beschrieben. Dabei werden weitere Merkmale, Zielsetzungen und Vorteile gemäß der Erfindung erörtert. In den Darstellungen zeigen:
- Fig. 1: eine erste Ausführungsform gemäß der Erfindung in einer querschnittlichen Darstellung sowie in einem axialen Längsschnitt gemäß einem Abschnitt A-A;
- Fig. 2: eine einfachere Ausführungsform gemäß der Erfindung in einer Darstellungsform vergleichbar mit der gemäß Fig. 1;
- Fig. 3: eine vorteilhafte Ausführungsform in einer Darstellung, die mit den Darstellungen gemäß den Fig. 1 und 2 vergleichbar ist; und
- Fig. 4: eine bevorzugte Ausführungsform gemäß der Erfindung in Darstellungsweisen, wie die übrigen Ausführungsformen.

Die in den Ausführungsformen gezeigten Vorrichtungen gemäß der Erfindung können prinzipiell überall eingesetzt werden, wo mechanische Stöße bzw. Schocks in Bezug auf Zweiräder, d.h. Fahrräder wie etwa Rennräder, Mountainbikes oder dgl. von den Fahrern ferngehalten werden. D.h., die erfindungsgemäße Schockdämpfungsvorrichtung kann beispielsweise als Sattelstütze, zwischen dem Lenker und dem Rahmen innerhalb eines Rahmens eines Fahrrades bzw. eines Zweirades, im Bereich des Vorbaus des Lenkers, im Bereich der Lenkergabel bzw. im Bereich des Gabelschaftes vorgesehen werden, um ihrem Zweck zu dienen.

In den Fig. sind identische oder wenigstens funktionsgleiche Teile mit den gleichen Bezugszeichen gekennzeichnet.

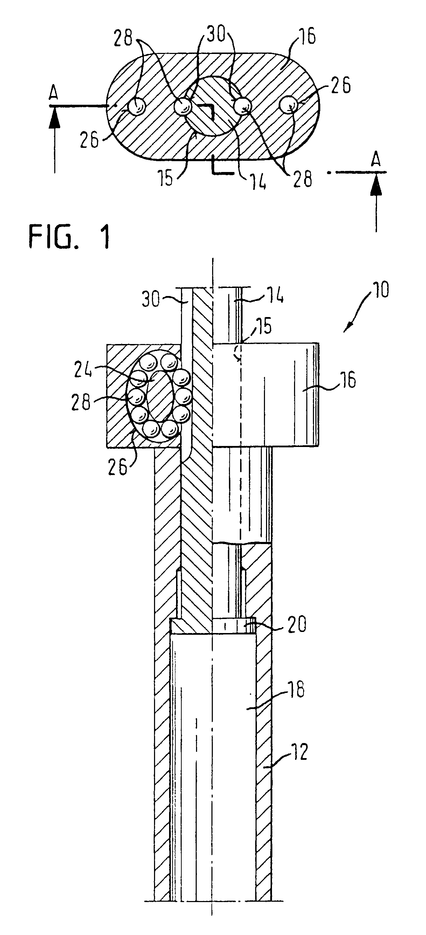

In Fig. 1 ist eine Schockdämpfungsvorrichtung 10 dargestellt, und zwar zum Einen in einer querschnittlichen Darstellung durch einen Verdrehsicherungsabschnitt 16 und zum Anderen in einer Schnittdarstellung gemäß dem Schnitt A-A gemäß dem oberen Teil der Fig. 1.

Der obere Teil der Fig. 1 zeigt dementsprechend den Verdrehsicherungsabschnitt 16, der wenigstens angenähert oval ausgebildet ist. Ein zweiter Anschlussabschnitt 14, an den an dessen oberen Ende beispielsweise ein Sattel anschließt bzw. ein Lenker anschließt, läuft durch den Verdrehsicherungsabschnitt 16 hindurch. Der Verdrehsicherungsabschnitt 14 weist Führungskulissen 30 in der Form von Führungsrillen bzw. Führungsschlitzen auf, in die Kugeln 28 von dem Körper des Verdrehsicherungsabschnittes 16 her eingreifen. Die Kugeln 28 sind in dem Verdrehsicherungsabschnitt 16 innerhalb von Umlauflagern 26 gehalten. Bei einem axialen Schock kann der zweite Anschlussabschnitt 14 durch den Verdrehsicherungsabschnitt 16 bzw. dessen Öffnung 15 geführt und gegen Verdrehen durch die Kugeln 29 gesichert hindurchlaufen. Der axiale Längsschnitt der Dämpfungsvorrichtung 10 gemäß dem unteren Abschnitt von Fig. 1 zeigt die Lage eines Umlaufkugellagers 24 innerhalb des Verdrehsicherungsabschnittes 16. Die Kugeln 28 sind innerhalb des Umlauflagerraumes 26 frei drehbar und in einer freilaufenden Weise gelagert. Bei jedem Schock, der auf einen unteren ersten Anschlussabschnitt 12 bzw. auf den oberen zweiten Anschlussabschnitt 14 einwirkt, können die Kugeln 28 zum Einen axial durchlaufen und sich andererseits frei um ihren eigenen Mittelpunkt drehen. Bei dieser sehr vorteilhaften und ggf. auch erfindungsgemäßen Ausführungsform treten nur sehr geringe Reibungsverluste auf und auch in dem Falle sehr schneller und kurzfristiger Stöße können diese durch die Lagerung bzw. Verdrehsicherung 16 unbeeinträchtigt abgefedert werden. Dies ist auch über eine sehr lange Zeit möglich, was beispielsweise bei herkömmlichen Führungen nicht der Fall war, da diese relativ leicht und schnell abgenutzt bzw. ausgeschlagen sind.

Selbst bei Verwendung einzelner Kugeln, die um den Umfang des ersten oder des zweiten Anschlussabschnittes verteilt sind, können die gemäß den äußerst vorteilhaften Ausführungsformen erzielbaren Vorteile bei weitem nicht erzielt werden, wenn auch gegenüber dem Stand der Technik bereits große Vorteile erzielt werden können. Denn in dem Fall einzelner Kugeln, die lediglich um ihr eigenes Zentrum rotieren können, in axialer Stoßrichtung jedoch nicht ausweichen können, treten bei größeren Stößen bereits nach kurzer Zeit Schadstellen an den Kugeln auf, die schon nach vergleichsweise kurzer Zeit zum Ausfall der gesamten Stoßdämpfungsvorrichtung führen könnten. Dies ist in dem Fall nicht gegeben, wie er gemäß der vorliegenden Erfindung gemäß den Ausführungsformen prädestiniert wird.

Der obere an den Lenker bzw. an den Sattel ansetzende Anschlussabschnitt 14 reicht über einen Schulterabschnitt 20 in den Schockdämpfungsraum 18 des unteren bzw. zweiten Anschlussabschnittes 12 hinein. Der Raum 18 weist beispielsweise eine mechanische Feder, eine pneumatische oder hydraulische Feder oder dgl. auf, die die Schockenergie dämpfen und abmildern kann.

Bei der dargestellten Ausführungsform ist es prinzipiell auch möglich, beispielsweise den Anschlussabschnitt 12 so auszugestalten, dass er einen Sattel bzw. einen Lenker trägt um den Anschlussabschnitt 14 so auszubilden, dass dieser an den Fahrradrahmen im weitesten Sinne angeschlossen ist.

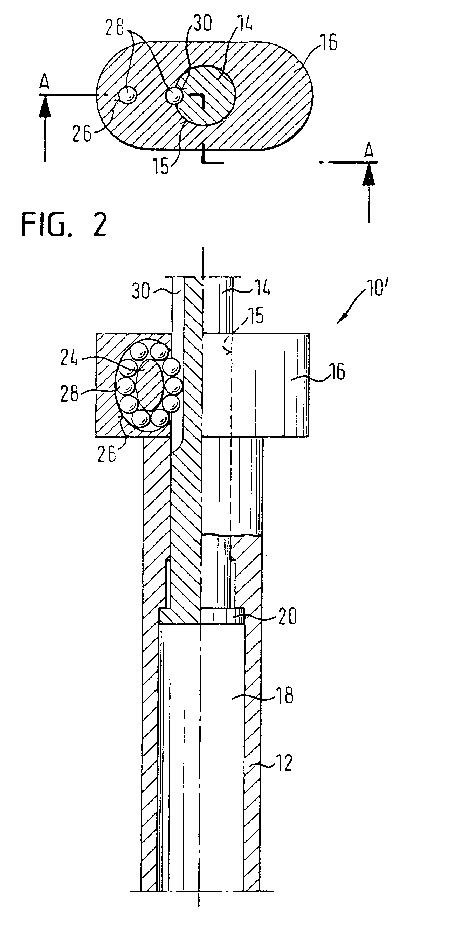

Die nachfolgenden Ausführungsformen gemäß den Fig. 2, 3 und 4 unterscheiden sich von der Ausführungsform gemäß der Fig. 1 im Wesentlichen nur durch die Anzahl der Kugellager bzw. Umlaufkugellager, die zum Einsatz gelangen.

So wird gemäß Fig. 2 lediglich ein einziges Umlaufkugellager 24 verwendet, um eine Verdrehsicherung zu bilden. Hier wird es an den dem Umlaufkugellager gegenüberliegenden Anschlussbereichen zwischen dem Anschlussabschnitt 14 und dem Körper der Verdrehsicherung 16 zu Reibungen kommen, die einen Verschleiß bewirken können. Auch an den Rändern der Kugeln können Kräfte auftreten, die zu einer Abnutzung der Kugeln des Kugellagers führen. Entsprechendes gilt auch für die Ausfißmmgsform gemäß Fig. 1, bei der Querkräfte ebenfalls auftreten können, die nicht auf die Kugeln, sondern auf periphere Randbereiche des Anschlussabschnittes einwirken können und zu Abnutzungserscheinungen führen können.

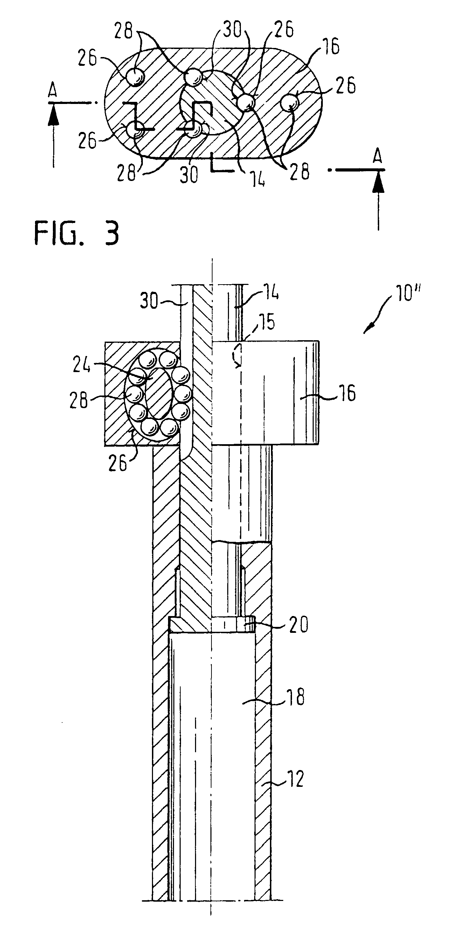

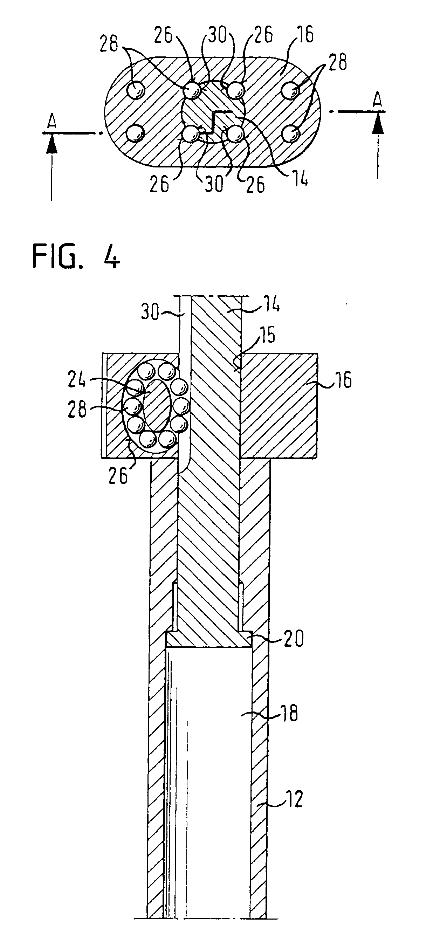

Demgegenüber sind bei den Ausführungsformen gemäß den Fig. 3 und 4 mehrere Umlaufkugellager im Einsatz, nämlich zum Einen drei und zum Anderen vier. Hier können auch auftretende Querkräfte von den Kugellagern abgefangen werden, und somit sind diese Ausführungsformen im Hinblick auf ihre Beständigkeit und ihre Funktionszuverlässigkeit sehr zu bevorzugen.

## Patentansprüche

1. Schockdämpfungsvorrichtung, bevorzugt für Fahrräder, zur dämpfenden Lagerung einer Sitzgelegenheit, insbesondere eines Fahrradsattels, bzw. eines Lenkers oder dgl., mit den folgenden Merkmalen:
- einem ersten Anschlussabschnitt (12), um die Schockdämpfungsvorrichtung (10, 10', 10", 10''') an einem Fahrzeug- bzw. Fahrradabschnitt festzulegen;
- einem zweiten Anschlussabschnitt (14), um die Schockdämpfungsvorrichtung mit einer Sitzgelegenheit, einem Lenker oder dgl. zu verbinden;
- einem Feder- bzw. Schockdämpfungsabschnitt (18);
- mit wenigstens einer, bevorzugt mehreren Führungskulissen, -rillen bzw. -nuten (30);
- einem Verdrehsicherungsabschnitt (16), um einem Verdrehen der Sitzgelegenheit, des Lenkers oder dgl. gegenüber dem Fahrzeug- bzw. Fahrradrahmen entgegenzuwirken, wobei
- die Anschlussabschnitte (12, 14) einander überlappen und im Überlappungsbereich die Verdrehsicherung angeordnet ist,
- wobei der Verdrehsicherungsabschnitt (16) mehrere Kulissensteine, beispielsweise Kugeln, Walzen oder dgl. aufweist, die eine axiale Bewegung aber im Wesentlichen keine Verdrehung zwischen dem ersten und zweiten Anschlussabschnitt (12, 14) zulassen, wobei diese in die Führungskulissen (30), -nuten bzw. -rillen eingreifen, **dadurch gekennzeichnet, dass** die Kulissensteine wenigstens ein, bevorzugt drei oder vier Umlaufkugellager bilden, die im Falle mehrerer Umlaufkugellager winkelmäßig bevorzugt gleichmäßig über den Umfang des zugeordneten Anschlussabschnittes insbesondere in Bezug auf deren Eingriff in den zugeordneten Anschlussabschnitt (12, 14) verteilt sind.

2. Schockdämpfungsvorrichtung nach Anspruch 1, **dadurch gekennzeichnet, dass** der Verdrehsicherungsabschnitt (16) entweder gegenüber dem ersten oder gegenüber dem zweiten Anschlussabschnitt (12, 14) ortsfest gehalten ist.

3. Schockdämpfungsvorrichtung nach einem der Ansprüche 1 bis 2, **dadurch gekennzeichnet, dass** die Kulissensteine, beispielsweise Kugeln, in einer Ebene parallel zu der Querschnittsebene des ersten bzw. des zweiten Anschlussabschnittes (12, 14) vorgesehen sind.

4. Schockdämpfungsvorrichtung nach einem der Ansprüche 1 bis 3, **dadurch gekennzeichnet, dass** an wenigstens einer, bevorzugt wenigstens drei Bereichen des Verdrehsicherungsabschnitts (16) mehr als ein Kulissenstein, insbesondere eine Kugel, eine Walze oder dgl. in axialer Bewegungsrichtung des ersten zu dem zweiten Anschlussabschnitt hintereinander angeordnet sind.

5. Schockdämpfungsvorrichtung nach einem der Ansprüche 1 bis 4, **dadurch gekennzeichnet, dass** die Kulissensteine, beispielsweise Kugeln, Walzen oder dgl., in der axialen Bewegungsrichtung angeordnet sind, dass diese in der axialen Bewegungsrichtung wenigsten abschnittsweise mit dem ersten und/oder dem zweiten Anschlussabschnitt (12, 14) mitlaufen können.

6. Schockdämpfungsvorrichtung nach einem der Ansprüche 1 bis 5, **dadurch gekennzeichnet, dass** die Kulissensteine, beispielsweise Kugeln, Walzen oder dgl., in der axialen Bewegungsrichtung in einem Lagerraum (26) aufgenommen sind, wobei der Lagerraum in der axialen Bewegungsrichtung der Anschlussabschnitte (12, 14) eine größere Erstreckung hat als in der Umfangsrichtung der Anschlussabschnitte (12, 14).

## Claims

1. Shock-absorbing device, preferably for bicycles, for the shock-absorbing mounting of a seat, in particular a bicycle saddle, or a handlebar or the like, comprising the following features:
a first connecting portion (12) for fixing the shock-absorbing device (10, 10', 10", 10''') on a vehicle or bicycle portion;
a second connecting portion (14) for connecting the shock-absorbing device to a seat, a handlebar or the like;
a spring or shock-absorbing portion (18);
having at least one, preferably several, guide slides, channels or grooves (30);
an anti-rotation portion (16) for preventing rotation of the seat, the handlebar or the like with respect to the vehicle or bicycle frame,
wherein
the connecting portions (12, 14) overlap one another and the anti-rotation means is arranged in the overlap region,
wherein the anti-rotation portion (16) has several sliding blocks, for example balls, rollers or the like, which allow an axial movement but essentially no rotation between the first and second connecting portion (12, 14),
wherein these sliding blocks engage in the guide slides (30), grooves or channels, **characterized in that** the sliding blocks form at least one, preferably three or four, rotary ball bearings which, if there are several rotary ball bearings, are preferably distributed at a uniform angular spacing over the circumference of the associated connecting portion in particular with respect to engagement thereof in the associated connecting portion (12, 14).

2. Shock-absorbing device according to Claim 1, **characterized in that** the anti-rotation portion (16) is held in a fixed location either with respect to the first or with respect to the second connecting portion (12, 14).

3. Shock-absorbing device according to either of Claims 1 and 2, **characterized in that** the sliding blocks, for example balls, are provided in a plane parallel to the cross-sectional plane of the first and second connecting portion (12, 14).

4. Shock-absorbing device according to one of Claims 1 to 3, **characterized in that** a number of sliding blocks, in particular balls, rollers or the like, are arranged one behind the other in the axial movement direction of the first connecting portion with respect to the second connecting portion on at least one, preferably at least three, regions of the anti-rotation portion (16).

5. Shock-absorbing device according to one of Claims 1 to 4, **characterized in that** the sliding blocks, for example balls, rollers or the like, are arranged in the axial movement direction, and **in that** these can run at least in part with the first and/or second connecting portion (12, 14) in the axial movement direction.

6. Shock-absorbing device according to one of Claims 1 to 5, **characterized in that** the sliding blocks, for example balls, rollers or the like, are received in a bearing space (26) in the axial movement direction, wherein the bearing space has a greater extent in the axial movement direction of the connecting portions (12, 14) than in the circumferential direction of the connecting portions (12, 14).

## Revendications

1. Dispositif antichoc, de préférence pour des bicyclettes, destiné à la suspension amortissante d'un siège, en particulier d'une selle de bicyclette, et/ou d'un guidon ou similaire, présentant les caractéristiques suivantes :
- un premier tronçon de raccordement (12), destiné à fixer le dispositif antichoc (10, 10', 10", 10'") sur une partie de véhicule ou de bicyclette ;
- un deuxième tronçon de raccordement (14), destiné à raccorder le dispositif antichoc à un siège, un guidon ou similaire ;
- un tronçon élastique et/où antichoc (18) ;
- avec au moins une, de préférence plusieurs coulisses, rainures ou gorges de guidage (30) ;
- un tronçon de blocage en rotation (16) destiné à s'opposer à une rotation du siège, du guidon ou similaire, par rapport au véhicule ou au cadre de bicyclette,
- les tronçons de raccordement (12, 14) se chevauchant et le dispositif de blocage en rotation étant situé dans la zone de chevauchement,
- le tronçon de blocage en rotation (16) présentant plusieurs coulisseaux, par exemple des billes, des cylindres ou similaires, qui permettent un déplacement axial, mais sensiblement aucune rotation entre le premier et le deuxième tronçon de raccordement (12, 14), ceux-ci étant insérés dans les coulisses, rainures ou gorges de guidage (30), **caractérisé en ce que** les coulisseaux forment au moins un, de préférence trois ou quatre roulements à billes tournants qui, lorsque sont prévus plusieurs roulements à billes tournants, sont de préférence répartis régulièrement, du point de vue angulaire, sur la circonférence du tronçon de raccordement qui leur est associé, en particulier en ce qui concerne leur point d'insertion dans le tronçon de raccordement (12, 14) associé.

2. Dispositif antichoc selon la revendication 1, **caractérisé en ce que** le tronçon de blocage en rotation (16) est maintenu fixe soit par rapport au premier, soit par rapport au deuxième tronçon de raccordement (12, 14).

3. Dispositif antichoc selon l'une des revendications 1 à 2, **caractérisé en ce que** les coulisseaux, par exemple les billes, sont prévu(e)s dans un plan qui est parallèle au plan de coupe transversale du premier ou du deuxième tronçon de raccordement (12, 14).

4. Dispositif antichoc selon l'une des revendications 1 à 3, **caractérisé en ce qu'**au niveau d'au moins une zone, de préférence d'au moins trois zones du tronçon de blocage en rotation (16) sont disposés plus d'un coulisseau, en particulier une bille, un cylindre ou similaire et ce, les uns derrière les autres dans la direction de déplacement axial du premier tronçon de raccordement vers le deuxième.

5. Dispositif antichoc selon l'une des revendications 1 à 4, **caractérisé en ce que** les coulisseaux, par exemple les billes, cylindres ou similaires, sont disposés suivant la direction de déplacement axial, afin qu'ils puissent se déplacer, suivant la direction de déplacement axial, au moins sur un tronçon, avec le premier et/ou le deuxième tronçon de raccordement (12, 14).

6. Dispositif antichoc selon l'une des revendications 1 à 5, **caractérisé en ce que** les coulisseaux, par exemple les billes, cylindres ou similaires, dans la direction de déplacement axial, sont logés dans un espace à palier (26), l'espace à palier, dans la direction de déplacement axial des troncons de raccordement (12, 14), présentant des dimensions plus importantes que dans la direction circonférentielle des tronçons de raccordement (12, 14).
